# EUROPEAN PATENT APPLICATION

(11) **EP 2 149 597 A1**
(43) Date of publication of application: **03.02.2010**
(21) Application number: 08752080.5
(22) Date of filing: 18.04.2008
(51) Int. Cl.: C10L 5/44

(54) **BIOCOKE PRODUCING APPARATUS, METHOD OF CONTROLLING THE SAME AND PROCESS FOR PRODUCTION THEREOF**

(30) Priority: 27.04.2007 JP 2007119273
(71) Applicant: Naniwa Roki Co., Ltd., Yao-shi, Osaka 581-0851 (JP); Kinki University, Higashi-Osaka-shi Osaka 577-8502 (JP)
(72) Inventor: KAWAMI, Yoshimasa, Yokohama-shi Kanagawa 231-8715 (JP); SATOU, Jun, Yokohama-shi Kanagawa 236-8515 (JP); IDA, Tamio, Higashi-Osaka-shi Osaka 577-8502 (JP)
(74) Representative: advotec.
(86) International application number: PCT/JP2008/057999
(87) International publication number: WO 2008/136369

(57) **Abstract**

A biocoke producing apparatus that realizes efficient mass production of biocoke; a method of controlling the same; and a process for manufacture thereof. The apparatus includes a horizontal tubular reaction vessel (10) provided on its one end side with a supply part (11) for pulverized biomass and provided on its other end side with a discharge part (12). On the supply part side, there is provided an extrusion piston (6) capable of reciprocation along the longitudinal direction in the interior of the reaction vessel and capable of pressurizing the pulverized biomass within the vessel; The temperature range and pressure range for inducing a pyrolytic or thermal curing reaction of lignin and hemicellulose contained in the pulverized biomass are preset, and the reaction vessel (10) is provided with a thermal reaction region (13) for heating the pulverized biomass at temperature within the above temperature range and with a cooling region (14). By means of the extrusion piston (6), not only is the pulverized biomass transferred so as to stay for a given period of time in each of the regions but also the pulverized biomass within the vessel is pressurized so as to fall within the above pressure range.

## Description

### BACKGROUND OF THE INVENTION

### Field of the Invention

The present invention generally relates to the field of producing biocokes using biomass as a raw material, and particularly to a biocoke producing apparatus, method of controlling the same and process for producing thereof, which enables industrial mass production of bio-cokes which can be used efficiently instead of coke especially.

### Description of the Related Art

In recent years, in view of global worming, reduction of CO2 emission is promoted. Especially, at combustion facilities such as power boiler, fossil fuels such as coal and heavy oil are often used as fuel. However, these fossil fuels are a cause of global warming from a perspective of CO2 emission, and thus the use thereof is becoming more regulated in the view of protecting the global environment. Also from a prespective of fossil fuel drain, there is a need for developing a substitute energy source and putting the source into practical use.

The effort to promote utilization of fuel using biomass instead of coal cokes is being made. In this invention, biomass is an organic matter which is converted by photosynthesis such as ligneous matters, grass plants, crops, and kitchen waste. By processing these types of biomass for fuel, it becomes possible to utilize biomass as a energy source or industrial raw material.

The biomass can be transformed into fuel by drying the biomass to fuel or by pressurizing biomass to a fuel pellet, or by carbonization or destructive distillation. However, in the drying method, air ratio in the dried biomass remains large and apparent specific gravity is small, thus making it difficult to transport or store the fuel. This form of fuel is not very efficient for long distance transportation or storage.

The method to convert biomass into a fuel pellet is disclosed in Patent Reference 1 (Japanese Publication S61-27435). This method comprises adjusting moisture content of comminuted fibrous particles to about 16% to about 28% by weight, and compressing the material in a die to dry into the fuel pellet.

The method of destructive distillation is disclosed in Patent Reference 2 (JP2003-206490A). According to this method, in oxygen-depleted environment biomass is heated at 200 to 500°C, preferably 250 to 400°C, thus to produce a precursor of charred compact fuel of biomass.

However, according to the method disclosed in Patent Reference 1,biomass is compressed into a pallet. In the pellet still exists airspace, causing air (oxygen) to disperse within the pellet and shortening the combustion time, and among pulverized biomass exists no binding, causing the pallet to have insufficient hardness.

Moreover, according to a destructive distillation method disclosed in Patent Reference 2 and other references, processed biomass has more value than unprocessed biomass but in comparison to coal cokes still apparent specific gravity is still small and has lower heat value. It also has lower hardness compared to coal cokes, which is insufficient to substitute coal cokes.

### SUMMARY OF THE INVENTION

The present invention has been made in view of such problems as described above, and it is an object of the present invention to provide a biocoke producing apparatus, method of controlling the same and process for producing thereof, which achieves efficient mass production of biocoke.

Recently, as an alternative to coal cokes, recently bio-cokes are being studied. Bio-cokes are produced by maintaining biomass source in compressed and heated state for a certain period of time and cooling the material. The compression and heating condition of pulverized biomass is set within the range that heat decomposition or thermal hardening of hemicellulose of the pulverized biomass is induced. In this way, reaction mechanism is established and bio-coke with high hardness and high heat value is produced. With the reaction mechanism under the above-identified condition, hemicellulose which is fiber element of the pulverized biomass is thermally decomposed and develops adhesion effect, and superheated steam from the pulverized biomass induces lignin to react at a low temperature keeping its structure, which acts with consolidation effect synergistically, thereby producing bio-coke with high hardness and high heat value. The thermal hardening reaction makes progress as reaction activity spots are induced amongst phenolic macromolecules contained in lignin or the like.

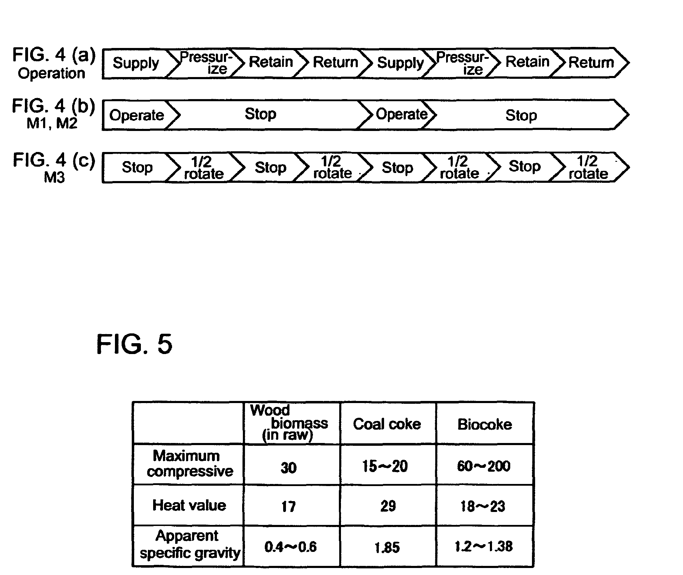

FIG.5 is a table comparing physical properties of biocoke with those of other fuels. The values shown in the table were obtained in experiments, thus should not limit the present invention.

As shown in the table, physicality values of biocoke are 1.2 to 1.38 in apparent specific gravity, 60 to 200MPa in maximum compressive strength, and 18 to 23MJ/kg in heat value showing that biocoke has superior performance in hardness and combustibleness, and when compared with the physicality values of wood biomass in raw which are 0.4 to 0.6 in apparent specific gravity, 30MPa in maximum compressive strength, and 17MJ/kg in heat value, it can be understood that biocoke has much better performance in hardness and combustibleness than the wood biomass. The physicality values of coal coke are 1.85 in apparent specific gravity, 15 in maximum compressive strength, and 29MJ/kg in heat value but biocoke still shows superior performance in combustibleness and hardness.

Consequently, not only biocoke is a functional substitute of coal cokes but also biocoke posses a high value as a material.

However, bio-cokes are still in the experiment stage and in reality the reaction containers are filled up with pulverized biomass manually and manufactured sequentially using one reaction container.
The present invention proposes a biocoke producing apparatus for producing biocokes by press-shaping pulverized biomass, whose moisture content is adjusted to a certain ratio, while the pulverized biomass is heated, said apparatus comprising:
a horizontal tubular reaction vessel having a supply part on its one end side for pulverized biomass and a discharge part on its other end side for biocoke; and
an extruding means provided on said supply part side, being capable of reciprocation along the longitudinal direction in the interior of the reaction vessel and capable of pressurizing the pulverized biomass within the vessel,
   wherein a temperature range and a pressure range for inducing a pyrolytic of hemicellulose and thermal curing reaction of lignin contained in the pulverized biomass are preset; and said reaction vessel is provided with a thermal reaction region for heating the pulverized biomass at temperature within said temperature range and with a cooling region for cooling the heated pulverized biomass, said thermal reaction region located closer to the supply part side and said cooling region closer to the discharge part side; and said extrusion means transfer said pulverized biomass so as to stay for a given period of time in each of the regions and pressurizes said pulverized biomass within the vessel so as to fall within said pressure range.

According to the present invention, efficient production of biocoke that is usable as a substitute of coal coke is possible. Specifically, biocoke can be industrially produced in large amounts by processing pulverized biomass continuously while being pushed within the vessel by the extrusion means.

According to the embodiment, production of a long biocoke can be made, thus the length/size of biocoke product can be easily adjusted and can be favorably applied to other types of pulverized biomass.

Moreover, the biocoke producing apparatus wherein a pressure adjust region is provided in the downstream of said cooling region, which comprises a pressure adjusting device for applying pressure to said pulverizate biomass within the vessel from the outer circumference, and said extruding means pressurizes pulverized biomass from said supply part side within said vessel, and said pressure adjusting device adjusts the pressure applied thereto, thereby maintaining said pulverized biomass within said pressure range.

With this configuration, it is easy to unfailingly keep pulverized biomass within the vessel in the desired pressure range.

The biocoke producing apparatus is further **characterized in that** the extruding means is configured so that the pulverized biomass stays in said thermal reaction region and cooling region temporarily By configuring so as to stop and retain the pulverized biomass at each process region for a certain period of time, the length of the reaction vessel may be shortened, thereby achieving a smaller apparatus and saving more space.

Furthermore, the present invention proposes a method of controlling the biocoke apparatus, comprising;
a supply means for supplying said pulverized biomass to said supply part;
a supply driving means for controlling the driving of said supply means; and
a extrusion driving means for controlling the driving of said extruding means:
   wherein said supply driving means operates only when the pulverized biomass is supplied, and said extrusion driving means operates when the pulverized biomass is transferred to each of said process regions and stops once the pulverized biomass reaches a designated process region so that said pulverized biomass stays being pressurized therein.

With this method, supply of pulverized biomass and efficient performance of pressurizing and transferring can be done.
The present invention also suggests a process for producing biocokes by press-shaping pulverized biomass, whose moisture content is adjusted to a predetermined ratio, while the pulverized biomass is heated within a reaction vessel,
wherein a temperature range and pressure range for inducing a pyrolytic of hemicellulose and thermal curing reaction of lignin contained in the pulverized biomass are preset and said reaction vessel is a horizontal tubular,
said process comprising steps of:
transferring the pulverized biomass supplied from one end of said reaction vessel by means of a extrusion means;
pressurizing said pulverized biomass within said reaction vessel to be in said pressure range;
heating said pressurized pulverized biomass to be in said temperature range; and
cooling said heated pulverized biomass,
by means of said extrusion means, transferring of said pulverized biomass is controlled so that the time of the pulverized biomass staying in each of the steps is ensured.

The process for producing biocoke further comprises the steps of:
adjusting the pressure applied to the pulverized biomass from the outer circumference of said reaction vessel after said cooling step,
   wherein said pulverized biomass is maintained in said pressure range by adjusting the pressure in said step of adjusting the pressure besides the pressure applied from the supply part side within the vessel by said extrusion means.

The process for producing biocoke is also **characterized in that** the pulverized biomass stays to undergo said heating step and said cooling step for a predetermined period of time, and then is transferred to the following steps.

According to the embodiment as described above, by pushing by means of the extrusion means and continuously processing pulverized biomass, it becomes possible to efficiently produce biocokes with high hardness and high calorific power which can be used as a substitute for coal cokes.

Moreover, in the embodiment, a long biocoke is produced, which enables adjustment in size of biocoke products. As the retaining time at each of the regions is freely adjustable and can be easily applied to a different type of pulverized biomass.

Furthermore, by stopping the transferring of pulverized biomass temporarily in each process region (step) and keeping the pulverized biomass for a certain period of time, the length of the reaction vessel can be shortened, thus making the apparatus smaller and saving space.

Lastly, by operating the extrusion driving means and supply driving means with time lag, supply of pulverized biomass and pressurizing and transferring of pulverized biomass can be efficiently performed.

### BRIEF DESCRIPTION OF THE DRAWINGS

FIG.1 is a configuration diagram of a biocoke producing apparatus of the present invention.
FIG.2 is a schematic view of an example of a thermal reaction region and cooling region of the present invention.
FIG.3 is a cross-sectional view of a pressure adjusting region of the present invention.
FIG.4 illustrates a movement timing of each motor.
FIG.5 is a table comparing physical properties of biocoke.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

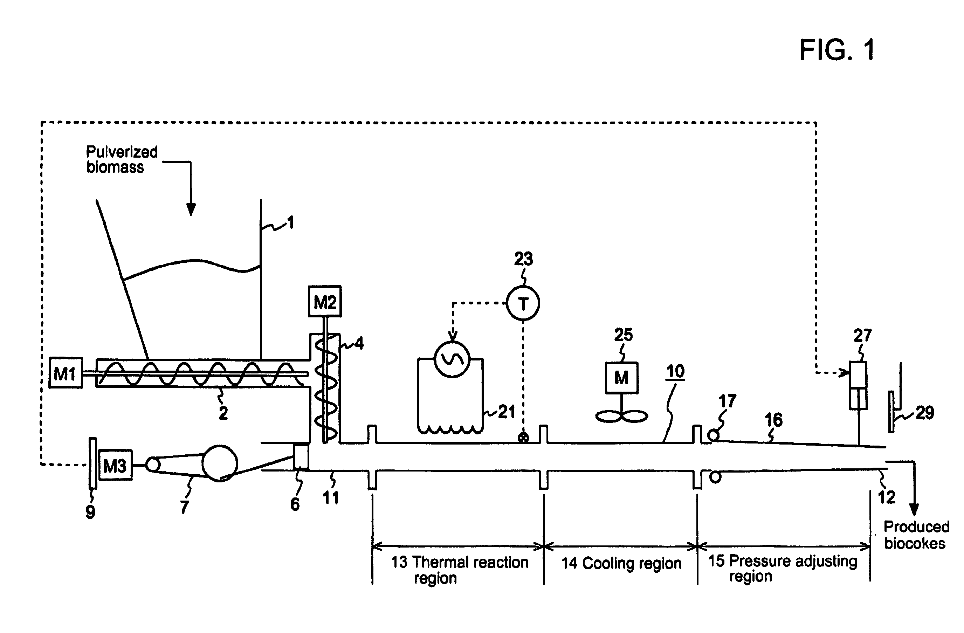

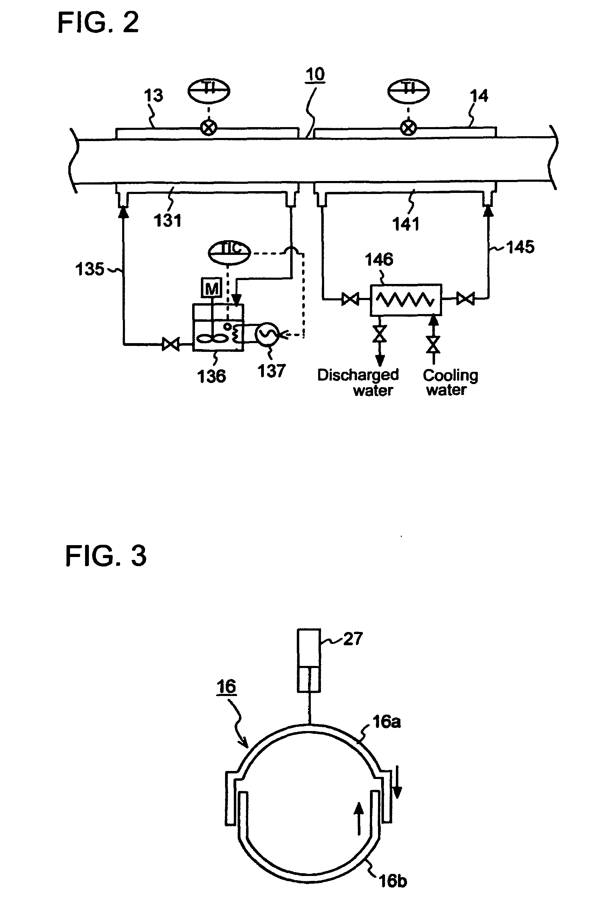

FIG.1 is a configuration diagram of a biocoke producing apparatus of the present invention. FIG.2 is a schematic view of am example pf a thermal reaction region and cooling region of the present invention. FIG.3 is a cross-sectional view of a pressure adjusting region of the present invention. FIG.4 illustrates a movement timing of each motor.

In the present invention, biomass used as raw material for bio-cokes in this invention is biomass which is organic matter resulted from photosynthesis. The biomass may be ligneous matters, grass plant, crops, agricultural matters, kitchen waste or the like. For instance, examples of biomass include lumber waste, thinned lumber, pruned branches, plants, agricultural waste, kitchen waste such as coffee grinds and used tea leaves.

In this invention, biomasses are all types of biomasses which is converted by photosynthesis in sunlight using water absorbed from roots and carbon dioxide in the air and forms organic matters such as sugar, cellulose and lignin.

### [Embodiment]

In the embodiment, not only that moisture content of the biomass is adjusted but also that pulverized biomass, which is pre-treated to be pulverized to a predetermined particle diameter or smaller, is used as a raw material. The biocoke producing apparatus of the present invention produces biocokes by cooling the pulverized biomass which is pressurized and heated under a predetermined condition of pressure and heat and then maintained under the condition for a certain period of time. The above described condition for pressurizing and heating is set within a range that induces pyrolytic or thermal curing reaction of hemicellulose and lignin contained in the pulverized biomass. Specifically, pressure and temperature are set within the range that induces a pyrolytic of hemicellulose and a thermal curing reaction of lignin contained in the pulverized biomass.

In reference to FIG.1, the overall configuration of the biocokes producing apparatus of the embodiment is explained.

The biocoke producing apparatus is mainly composed of a supply device for supplying a certain amount of pulverized biomass, and a reaction vessel 10 for producing biomass by inducing the above-described reactions of the supplied pulverized biomass.

Moreover, it is not shown in the drawings of this embodiment but it is preferable to further provide, in the upstream of the supply device, a pretreatment device for adjusting moisture content to predetermined moisture content and pulverizing biomass materials to a predetermined grain diameter or smaller, and a pulverizing device for pulverizing produced biocokes of large grain down to a desired grain diameter.

The aforementioned supply device for supplying pulverized biomass comprises a hopper 1 to which the pulverized biomass is supplied, a screw feeder 2 for supplying a certain amount of pulverized biomass from the hopper 1, a supply motor M1 for controlling the supply amount of the screw feeder 2, a screw feeder 4 for feeding the pulverized biomass supplied from the screw feeder 2 into the reaction vessel 10, and a motor M2 for controlling the amount of the pulverized biomass pushed in from the screw feeder 4.

The screw feeders 2 and 4 are the well-known screw feeders whose spiral blade rotates within a cylindrical casing to transfer materials, and the transfer amount of the pulverized biomass is adjusted by controlling the rotation of the spiral blades of the motors M1 and M2 connected to a rotation axis of each of the screw feeders.

The reaction vessel 10 is a horizontal tubular vessel, having a supply part 11 for pulverized biomass on one end thereof and a discharge part 12 for discharging biocokes produced within the reaction vessel on the other end. To the supply part of the vessel, the supply device for pulverized biomass is connected.

Moreover, on the side of the supply part 11, provided is a extrusion piston 6 being capable of reciprocating inside a hollow portion of reaction vessel 10 in longitudinal direction of the reaction vessel 10, giving pressure against the pulverized biomass inside the vessel toward the discharge part 12, and transferring and pressurizing the pulverized biomass. To the extrusion piston 6, connected is a piston drive unit comprising a hydraulic cylinder 7 and a press motor M3. The press motor M3 performs a torque control based on a transferring speed of the pulverized biomass in the vessel.

Furthermore, on a rear face of the extrusion motor M3, provided is a load cell 9 for detecting reactive force that the press piston 6 receives from the pulverized biomass.

Starting from the upstream with respect to the direction of the pulverized biomass transferred to, the reaction vessel 10 has a thermal reaction region 13, cooling region 14, and a pressure adjusting region 15.

In the thermal reaction region 13, there is a heating means for heating the pulverized biomass in the vessel to the above described temperature range. The heating means include heating by a heat medium, heating by steam, heating by high-pressure heated water, heating by an induction heater and the like. The composition of the heating means shown in FIG.1 is the heating given by an induction heater 21. It is configured that a temperature sensor 23 detects a temperature of the thermal reaction region 13 and an amount of current supplied to the induction heater 21 is controlled, thereby adjusting the heating temperature.

In the cooling region 14, there is a cooling means for cooling the heated pulverized biomass. The cooling means include cooling by a cooling medium, air cooling, water cooling and the like. The cooling means is preferably capable of cooling a processed material inside the vessel to 80°C and below, ideally 40°C and below. In FIG.1 the cooling means shown is cooling by an air cooling means 25.

As an example, in FIG.2 heating and cooling are performed by a heating medium and a cooling medium in the thermal reaction region 13 and the cooling region 14 correspondingly.

An outer circumference of the thermal reaction region 13 is covered by a jacket, and inside the jacket a heat medium path 131 is provided. A heating line 135 is connected to an inlet and an outlet of the heat medium path 131. A heating means for heating the heat medium to the predetermined temperature is provided on the heating line 135. The heating means is not limited but may be a heat-medium tank 136 and an induction heater 137 provided in the tank 136 as shown in the figure. In this case, a temperature sensor detects the temperature in the heat-medium tank 136, and the current of the induction heater 137 is controlled, thereby adjusting the temperature of the heat medium.

In a similar manner, an outer circumference of the cooling region 14 is covered by a jacket, and inside the jacket a cooling medium path 141 is provided. A cooling line 145 is connected to an inlet and an outlet of the cooling medium path 141. A cooing means such as a heat exchanger 146 is provided on the cooling line 145.

The pressure adjusting region 15 has a pressurizing mechanism comprising a pressure adjusting device 27 for applying pressure against the processed product in the vessel from the outer circumference of the reaction vessel 10. The pressurizing mechanism is configured such that the reaction vessel 10 consists of a semicylindrical upper tube 16a and a semicylindrical lower tube 16b, and the semicylindrical tubes 16a and 16b are housed slidably each other in the height direction and able to freely adjust the diameter. At least one of the semicylindrical tubes is slidably supported by a hinge 17 and the semicylindrical tube that is movable is connected to the pressure adjusting device 27 such as a hydraulic transmission. And the pressure adjusting device 27 moves the slidable semicylindrical tube against the other tube, pressuring the pulverized biomass inside the vessel. It is also applicable to make the both of the semicylindrical tubes 16a and 16b slidable.

In the pressure adjusting region 15, the pressure against the pulverized biomass within the reaction vessel 10 is adjusted. Specifically, the pressure within the reaction vessel 10 is determined by the pressure applied by the press piston 6 at the supply side, and the pressure adjusted by the pressure adjusting device 27 at the discharge side. Consequently, the load cell 9 detects reactive force received by the press piston 6 from the pulverized biomass, and the pressure adjusting device 27 is controlled based on the detected pressure, thereby adjusting the pressure within the vessel. In this case, it is preferable that the desired pressure of the aforesaid pressure range of the pulverized biomass of the load cell side is preset based on a relation between the detected pressure detected by the load cell 9 and the pressure applied to the pulverized biomass, and the pressure adjusting device 27 is controlled to adjust the pressure at the discharge side to meet the desired pressure range.

From the discharge part 12, biocokes produced in the reaction vessel 10 is discharged. In the downstream of the discharge part 12, a cutting means 29 for cutting the discharged biocokes is preferably provided.

FIG.4 illustrates a movement timing of each motor. In FIG.4, (a) is a time chart illustrating the operation of the reaction vessel, (b) is a time chart illustrating the operation of the supply motor M1 and the extrusion motor M2, and (c) is a time chart illustrating the operation of the extrusion motor M3.

In FIG.4, when pulverized biomass is supplied, the supply motor M1 is operated to transfer the pulverized biomass by the screw feeder 2, and the extrusion motor M2 is operated to supply pulverized biomass into the reaction vessel 10 by the screw feeder 4. During this operation, the extrusion motor M3 is stopped and the extrusion piston 6 is stopped as well.

Once the predetermined amount of the pulverized biomass is fed into the reaction vessel 10, the supply motor M1 and extrusion motor M2 are stopped, and the extrusion motor M3 is operated. Then, the pulverized biomass is transferred to the thermal reaction region 13 by the extrusion piston 6 connected to the extrusion motor M3 and subsequently the extrusion motor M3 is stopped. During this operation, the supply motor M1 and the press motor M2 are stopped. While the pulverized biomass is maintained in the predetermined pressure range in the thermal reaction range 13, the pulverized biomass is heated by the heating means to the predetermined temperature range and maintained for a certain period of time, and then returned to the original position (the upstream of the supply part 11) by operating the extrusion motor M3.

Furthermore, after the pulverized biomass is supplied into the reaction vessel 10 by operating the supply motor M1 and extrusion motor M2, the extrusion motor M3 is operated and the pulverized biomass is transferred to the thermal reaction region 13 and the pressurizing process and retainment process are repeated. During this operatin, the pulverized biomass supplied in the previous operation is transferred to the cooling region 14.

The mechanism of the biocokes producing apparatus with above mentioned configurations is explained hereinafter, including an operation method thereof. Meanwhile, values described herein such as temperature, pressure, moisture content and size are preferable references for the apparatus but should not be exclusive.

First, for pretreating the pulverized biomass as a raw material, moisture adjustment is performed by drying the biomass to the moisture ratio of 5 to 10%, and the dried biomass is pulverized to 3mm or smaller in grain size, preferably 0.1mm or smaller. Moreover, depending on types of biomass, moisture conditioning of the biomass may be performed after drying and pulverizing steps. By doing so, it becomes possible to improve density in the reaction vessel 10 and evenly fill the reaction vessel, when the reaction vessel 10 is filled with the pulverized biomass. Thus, contact between pulverized biomass particles is enhanced in a thermal forming, thereby improving a hardness of the formed product.

The pulverized biomass is fed into a pulverizate hopper 1. The pulverized biomass stored in the hopper 1 is fed at an appropriate amount by the screw feeders 2 and 4 to the reaction vessel 10.

The extrusion piston 6 transfers the pulverized biomass supplied into the reaction vessel 10 to the thermal reaction region 13. The pressure adjusting device 27 adjusts the pressure of the pulverized biomass in the thermal reaction region 13 and retains the pressure in a range of 8 to 25MPa. In the thermal reaction region 13, the pulverized biomass is heated by the heating means to 115 to 230 °C while being heated, and is retained for a certain period of time. The retaining time is set depending on the diameter of the reaction vessel. For instance, for a vessel with the diameter of 50mm, the retaining time is 10 to 20 minutes and for a vessel with the diameter of 150mm, the retaining time is 30 to 60 minutes.

By performing the reaction under the above mentioned conditions, hemicellulose which is a component of pulverized biomass, is pyrolyzed developing an adhesion effect, and superheated steam developing inside the reaction vessel induces lignin to react at a low temperature while maintaining its framework, acting synergistically with a consolidation effect, thereby producing biocokes with high hardness and high calorific power. Thermal curing reaction progresses by the induction of reaction activity points amongst phenolic high-molecules contained in lignin or the like.

Subsequently, the processed material within the vessel is transferred from the thermal reaction region 13 to the cooling region 14, and cooled in the cooling region 14 by the cooling means to 80°C and below, preferably 40°C and below. Moreover, if biocokes are taken out at a temperature higher than the above identified temperature, the adhesion effect of hemicellulose decreases. Therefore, biocoke must be cooled before being discharged.

After being cooled, the produced biocoke is discharged from the discharge part 12 through the pressure adjusting region 15. The biocoke being discharged from the discharge part 12 is cut at a predetermined length by a cutter (cutting means) 29 and shipped as a biocoke product.

Furthermore, in the embodiment, biocoke may be produced either by continuously transferring the material through the steps by the extrusion piston 6 to perform the steps, or by stop transferring at each step to perform the step and transfer again once the step is completed, which are repeated to undergo the steps.

In the case of continuously transferring the material, the vessel should be long enough to ensure the retaining time at each step as described above.

On the other hand, in the case of stopping and transferring the material, the location of the pulverized biomass within the vessel is detected, and held at the location for a certain period of time, and transferred. In this case, detection of the material location can be done by measuring a stroke length of the extrusion piston or by a position sensing device.

With the biocoke producing apparatus and method thereof of the present invention, it becomes possible to efficiently produce biocokes with high hardness and high calorific power which can be used as a substitute for coal cokes. Furthermore, the biocoke produced according to the embodiment can be used as a heat source, reducing agent or the like in a cupola furnace or blast furnace for a casting manufacture or an iron manufacture, and can be used as a burning fuel such as a power boiler fuel and slaked lime, and also as a material utilizing the high compressive strength of the biocoke.

According to the embodiment, industrial mass production of biocokes becomes possible by continuously processing the pulverized biomass as pushing the pulverized biomass by the extrusion piston 6.

Furthermore, according to the embodiment, a long biocoke can be produced and size adjustment of a biocoke product becomes possible. As the thermal reaction region 13 and the cooling region 14 are provided separately, an individual heating means or cooling means is needed, thus making the apparatus structure simpler. Moreover, the retaining time at each of the regions is freely adjustable and can be easily applied to a different type of pulverized biomass.

In the case of stopping and retaining the pulverized biomass at each process region, the length of the reaction vessel 10 may be shortened, thereby achieving a smaller apparatus and saving more space.

Lastly, in the case of processing the pulverized biomass continuously as being transferred, the production of biocokes can be increased.

### INDUSTRIAL APPLICABILITY

By the use of the biocoke producing apparatus of the embodiment, it is possible to efficiently produce biocokes with high hardness and high calorific power which can be used to substitute a coal cokes. The biocoke produced according to the embodiment can be used as a heat source, reducing agent or the like in a cupola furnace or blast furnace for a casting manufacture or an iron manufacture, and can be used as a burning fuel such as a power boiler fuel and slaked lime, and also as a material utilizing the high compressive strength of the biocoke.

## Claims

1. A biocoke producing apparatus for producing biocokes by press-shaping pulverized biomass, whose moisture content is adjusted to a certain ratio, while the pulverized biomass is heated, said apparatus comprising:
a horizontal tubular reaction vessel having a supply part on its one end side for pulverized biomass and a discharge part on its other end side for biocoke; and
an extruding means provided on said supply part side, being capable of reciprocation along the longitudinal direction in the interior of the reaction vessel and capable of pressurizing the pulverized biomass within the vessel,
wherein a temperature range and a pressure range for inducing a pyrolytic of hemicellulose and thermal curing reaction of lignin contained in the pulverized biomass are preset; and said reaction vessel is provided with a thermal reaction region for heating the pulverized biomass at temperature within said temperature range and with a cooling region for cooling the heated pulverized biomass, said thermal reaction region located closer to the supply part side and said cooling region closer to the discharge part side; and said extrusion means transfer said pulverized biomass so as to stay for a given period of time in each of the regions and pressurizes said pulverized biomass within the vessel so as to fall within said pressure range.

2. The biocoke producing apparatus according to claim 1, wherein a pressure adjust region is provided in the downstream of said cooling region, which comprises a pressure adjusting device for applying pressure to said pulverizate biomass within the vessel from the outer circumference, and said extruding means pressurizes pulverized biomass from said supply part side within said vessel, and said pressure adjusting device adjusts the pressure applied thereto, thereby maintaining said pulverized biomass within said pressure range.

3. The biocoke producing apparatus according to claim 1 or 2, wherein said extruding means is configured so that the pulverized biomass stays in said thermal reaction region and cooling region temporarily.

4. A method of controlling the biocoke apparatus of claim 1, comprising;
a supply means for supplying said pulverized biomass to said supply part;
a supply driving means for controlling the driving of said supply means; and
a extrusion driving means for controlling the driving of said extruding means:
wherein said supply driving means operates only when the pulverized biomass is supplied, and said extrusion driving means operates when the pulverized biomass is transferred to each of said process regions and stops once the pulverized biomass reaches a designated process region so that said pulverized biomass stays being pressurized therein.

5. A process for producing biocokes by press-shaping pulverized biomass, whose moisture content is adjusted to a predetermined ratio, while the pulverized biomass is heated within a reaction vessel,
wherein a temperature range and pressure range for inducing a pyrolytic of hemicellulose and thermal curing reaction of lignin contained in the pulverized biomass are preset and said reaction vessel is a horizontal tubular,
said process comprising steps of:
transferring the pulverized biomass supplied from one end of said reaction vessel by means of a extrusion means;
pressurizing said pulverized biomass within said reaction vessel to be in said pressure range;
heating said pressurized pulverized biomass to be in said temperature range; and
cooling said heated pulverized biomass,
by means of said extrusion means, transferring of said pulverized biomass is controlled so that the time of the pulverized biomass staying in each of the steps is ensured.

6. The process for producing biocoke according to claim 5, further comprising a step of;
adjusting the pressure applied to the pulverized biomass from the outer circumference of said reaction vessel after said cooling step,
wherein said pulverized biomass is maintained in said pressure range by adjusting the pressure in said step of adjusting the pressure besides the pressure applied from the supply part side within the vessel by said extrusion means.

7. The process for producing biocoke according to claim 5 or 6, wherein said pulverized biomass stays to undergo said heating step and said cooling step for a predetermined period of time, and then is transferred to the following steps.
